# EUROPEAN PATENT APPLICATION

(11) **EP 1 764 699 A1**
(43) Date of publication of application: **21.03.2007**
(21) Application number: 05748895.9
(22) Date of filing: 09.06.2005
(51) Int. Cl.: G06F 12/14, G06F 12/00, G06K 17/00, G06K 19/07, G06K 19/073

(54) **INFORMATION MANAGEMENT DEVICE AND INFORMATION MANAGEMENT METHOD**

(30) Priority: 14.06.2004 JP 2004175524
(71) Applicant: SONY CORPORATION, Tokyo 141-0001 (JP)
(72) Inventor: KURITA, Taro, c/o SONY CORPORATION, Tokyo 1410001 (JP)
(74) Representative: Körber, Martin Hans
(86) International application number: PCT/JP2005/010599
(87) International publication number: WO 2005/121976

(57) **Abstract**

To copy or back up value information electronically stored in a memory region and to smoothly transfer the value information between terminals.

An archive file including the terminal ID of a transfer destination is created from data in an IC card and is stored in a predetermined storage place, so that value information can be securely backed up. The archive file can be decompressed by only an apparatus specified with the terminal ID. A scheme in which access to a file and directory in the IC card is managed using a counter is employed. Further, after the archive file is archived in the storage space, the counter value of the original file is erased.

## Description

### Technical Field

The present invention relates to an information management apparatus and an information management method which manage access to information stored in a memory region having a relatively large capacity. In particular, the present invention relates to an information management apparatus and an information management method which store electronic value information in a memory region and perform secure information communication for electronic payment and so on.

More specifically, the present invention relates to an information management apparatus and an information management method which allocate various files in a memory region and manage information for service operation. In particular, the present invention relates to an information management apparatus and an information management method which copy or back up value information electronically stored in a memory region and smoothly transfer the value information between terminals.

### Background Art

A contactless proximity communication system, typified by IC cards, is beginning to become widespread because of simplicity in operation. Typically, for using an IC card, a user holds the IC card to a card reader/writer. The card reader/writer is always polling an IC card, so that, when it detects an external IC card, a communication operation therebetween is started. For example, with an IC card on which secret codes, other personal authentication information, and value information such as electronic tickets are stored, authentication processing can be performed on attendees and passengers at cash dispensers, the entrances of concert venues, the ticket gates of stations, and so on.

Recently, IC cards having memories with relatively large capacities have emerged in conjunction with improvements in micro-fabrication technology. With an IC card having a large-capacity memory, providing a file system in a memory space and simultaneously storing multiple applications therein allows the single IC card to be used for multiple purposes. For example, storing multiple applications, such as electronic money for electronic payment and an electronic ticket for entry into a specific concert venue, on one IC card allows the IC card to be used for various purposes. The "electronic money" and the "electronic ticket" as used herein refer to a scheme in which payment (electronic payment) is made based on electronic data issued according to a fund provided by a user or refer to such electronic data itself.

An IC card and a card reader/writer (a card reader/writer apparatus) may be provided with wired interfaces for connection with an external apparatus, in addition to wireless/contactless interfaces, and be incorporated into respective apparatuses, such as mobile phones, PDAs, (personal digital assistances), CE (consumer electronics) apparatuses, and personal computers. Such a configuration can provide those apparatuses with one or both of the IC card function and the card reader/writer function. In such a case, the IC card technology can be used as a versatile bidirectional proximity communication interface.

For example, when a proximity communication system is constituted by such apparatuses as computers and information home-electronic apparatuses, contactless communication using IC cards is performed on a one-to-one basis. Also, an apparatus can communicate with a non-apparatus counterpart device, such as a contactless IC card. In such a case, an application for performing one-to-many communication between one apparatus and multiple cards is also possible.

Further, various applications including communication of electronic value information with outside, such as electronic payment, utilizing IC cards can be executed on information processing terminals. For example, with a user interface, such as keyboard and a display provided on an information processing terminal, a user instruction for an IC card can be given by the information processing terminal. Also, when the IC card is connected to a mobile phone, content stored in the IC card can be communicated through a telephone network. Additionally, a charge for usage can be paid with the IC card from the mobile phone through the Internet connection.

A file system for a service provider may be allocated in the built-in memory of an IC card so that information (e.g., user identification/authentication information, other value information, and user history (a log)) for service operation carried out by the service provider is managed in the file system. This can achieve useful services that are based on contactless proximity communication and that replace conventional prepaid cards and service cards for respective shops.

Conventionally, IC cards are independently issued for each service provider and are used by users. Thus, a user must prepare IC cards for respective services he or she wishes to use and must carry them. In contrast, according to an IC card having a memory space with a relatively large capacity, a capacity that is enough to store information regarding multiple services can be ensured in the built-in memory of a single IC card (e.g., refer to Non-patent Document 1).

With regard to the memory region in an IC card, an IC card issuer manages the entire memory region in its initial state and a service provider, other than the IC card issuer, separates a new file system from the memory region and allocates the file system to an application for achieving the operation of each service. The file-system separation means virtual IC-card issuance. Repeating the memory-region separation operation provides a structure in which multiple files systems exist in the memory region in the IC card. This can provide multiple applications, i.e., diverse applications, using one IC card.

Various types of value information, such as electronic money and electronic tickets, can be securely stored on an IC card or an IC chip. When user convenience is considered, it is necessary to back up data held on the IC card. Examples include a case in which the model of mobile phone incorporating an IC chip in which value information is stored is changed and a case in which a failure occurs to a card or apparatus incorporating an IC card.

When data in an IC card is copied or backed up, duplication of the data must be prevented. In the case of cash transfer, cash may be moved from a wallet to another wallet, but does not increase. In contrast, while value information, such as electronic money or an electronic ticket, has a value equivalent to cash, the substance of the value information is digital data. Thus, there is a possibility that the original value information is duplicated in both the IC card of the data transmitting end and the IC card of the receiving end to permit both the ends to use the value information.

When data in an IC card is copied or backed up, data must be transferred to a correct party. In this case, when the IC card is used for multiple applications, i.e., is managed by multiple service providers, the procedure becomes complicated.

For example, value information in the IC chip may be transferred in conjunction with a procedure for changing the model of mobile phone. However, since there are possibilities that value information is lost due to a communication failure or machine failure during the transfer and the value information is fraudulently replicated or tampered with, telephone companies have great responsibility.

On the other hand, a method in which each piece of value information in the IC chip is transferred by a corresponding service provider is also possible. Although this method is effective in terms of responsibility separation, the user needs to undergo multiple procedures when the model of mobile phone is changed.

[Non-patent Document 1]
"Musen-IC-tagu no Subete - Goma-tsubu-chip de Bijinesu ga Kawaru" (issued on April 20, 2004, pp 106 to 107, RFID Technology Editing Department, NIkkei Business Publications, Inc.)

### Disclosure of Invention

### Problems to be Solved by the Invention

A primary object of the present invention is to provide a superior information management apparatus and an information management method which allow various files to be allocated in a memory region and allow information for service operation to be managed.

A further object of the present invention is to provide a superior information management apparatus and an information management method which allow value information electronically stored in a memory region to be copied or backed up and allow value information to be smoothly transferred between terminals.

### Means for Solving the Problems

The present invention has been made in view of the foregoing objects and provides an information management apparatus including:
a communication section for transmitting/receiving data through a wireless or wired transmission path;
data processing section for processing the data transmitted/received by the communication section;
a memory space in which a file processed by the data processing section is arranged; and
archive-file creating means for creating an archive file for at least one file to be backed up, identification information of a destination at which the archive file is to be decompressed being attached to the archive file.

The "information management apparatus" referred to herein is an apparatus in which a wireless communication section and a contactless IC card incorporating an IC chip having a data transmission/reception function and a data processing section, a contact IC card having terminals on its surface, or an IC card having function similar to the contact/contactless IC card are incorporated into an information-communication terminal apparatus, such as a mobile phone, a PHS (personal handyphone system), or a PDA (personal digital assistance). The IC chip having a contactless IC card function may be implemented with one chip into which an RF analog front end and a logic circuit (protocol control, RF demodulation, command processing, cryptographic processing, and memory management) are integrated or may be implemented with two or more chips in which the RF analog front end and the logic circuit are separated. Hereinafter, those may be simply referred to as an "IC card" as a collective term.

The information management apparatus according to the present invention has a data processing section and a memory region including a data storage memory, such as an EEPROM, and also has a data communication function. For a mobile phone, an external storage medium, such as an IC card having a built-in IC chip, may be detachably configured. Also, the function of a SIM (subscriber identify module) in which subscriber information issued by a mobile telephone company is recorded may be included in the IC card. The information management apparatus may perform data communication through an information communication network, such as the Internet, or may perform data communication directly with an external terminal apparatus in a wired or wireless manner.

The present invention relates to providing a service that utilizes the tamper resistance and the authentication function of an IC card and that requires security involving the communication of value information. The memory in the IC card is generally separated into multiple areas and encryption keys different for respective areas are provided to control access. The "area" referred to herein corresponds to a file system obtained by separating a memory space or a directory or an independent file in a file system.

When user convenience is considered, data held in an IC card needs to be backed up, and in particular, an IC card used for multiple applications has a problem in that the backup processing becomes complicated.

In contrast, in the present invention, since an archive file including the terminal ID of a transfer destination is created from data in the IC card and is stored in a predetermined storage place, value information can be securely backed up. Further, the archive file can be decompressed by only an apparatus specified with the terminal ID.

A scheme in which access to a file and directory in the IC card is managed using a counter is employed. Further, after the archive file is archived in a storage space, the counter value of the original file is erased to prevent access, thereby making it possible to achieve file transfer.

The information management apparatus according to the present invention further includes file-link designating means for designating a link between files to be simultaneously opened. The file-link designating means designates a link between a file whose archive file was created and an access management information file in which access management information for the file is described. When the file whose archive file was created is accessed, access management means simultaneously opens the access management file, performs access management in accordance with the access management information, and updates content of the access management information. The access management information file describes a counter value, as the access management information, for the file whose archive file was created, and the access management means decrements the counter value every time when the access management information file is opened.

### Advantages

According to the present invention, it is possible to provide a superior information management apparatus and an information management method which allow various files to be allocated in a memory area and allow information for service operation to be managed.

According to the present invention, it is possible to provide a superior information management apparatus and an information management method which allow value information electronically stored in a memory area to be copied or backed up and allow value information to be smoothly transferred between terminals.

Further objects, features, and advantages of the present invention will become apparent from more detailed descriptions based on an embodiment described below according to the present invention and the accompanying drawings.

### Brief Description of the Drawings

FIG. 1 is a diagram schematically showing the configuration of a contactless IC-card communication system to which the present invention is applicable.
FIG. 2 is a diagram schematically showing the entire configuration of a service providing system that uses electronic money, electronic tickets, and other value information which are realized using IC cards.
FIG. 3 is a view showing the state of a memory region in which the original card issuer manages only his or her file system.
FIG. 4 is a view showing that a card issuer can permit lending (or releasing), of a blank area in his/her file system, a memory in a certain region to a region administer.
FIG. 5 is a view showing a state in which another service provider has created a new file system by separating a memory region in an area permitted by a card issuer.
FIG. 6 is a view showing a state in which a common region administrator separates, in a region permitted by the card issuer, the memory, with common-region system code SC0.
FIG. 7 is a diagram showing a structure in which multiple file systems exist in a memory region in an IC card.
FIG. 8 is a diagram schematically showing an example of the structure of data in a file system.
FIG. 9 is a diagram showing the basic configuration of the file system.
FIG. 10 is a diagram showing a state in which areas are hierarchized in the memory space in the IC card.
FIG. 11 is a diagram schematically showing the functional configuration of firmware in the IC card.
FIG. 12 is a diagram showing a scheme for archiving files and directories in an IC card.
FIG. 13 schematically shows the basic configuration of a file system in which a link between files is designated.
FIG. 14 is a diagram schematically showing the configuration of a file system in which a file in a directory and a counter file are linked or a directory and a counter file are linked.
FIG. 15 is a diagram schematically showing the configuration of hardware of an IC card section according to one embodiment of the present invention.
FIG. 16 is a flow chart showing a processing procedure for setting a link relationship between files in the file system.
FIG. 17 is a flow chart showing a processing procedure for accessing a file having a file-link relationship designated in the file system.

### Reference Numerals

- 1: card reader/writer
- 2: IC card
- 3: controller
- 111: issuer communication apparatus
- 112: operator communication apparatus
- 113: manufacturer communication apparatus
- 114: storage-region separating/registering apparatus
- 115: operation-file registering apparatus
- 116: IC card
- 117: network
- 121: card issuer
- 122: card-storage-region operator
- 123: apparatus manufacturer
- 124: card-storage-region user
- 1001: antenna section
- 1002: analog section
- 1003: digital controller
- 1004: memory
- 1005: external interface
- 1006: carrier-wave detector
- 1100: mobile terminal
- 1110: program controller
- 1120: display section
- 1130: user input section
- 1140: power-supply controller

### Best Mode for Carrying Out the Invention

An embodiment of the present invention will be described below in detail with reference to the drawings.

### A. Contactless Data Communication System using IC Card

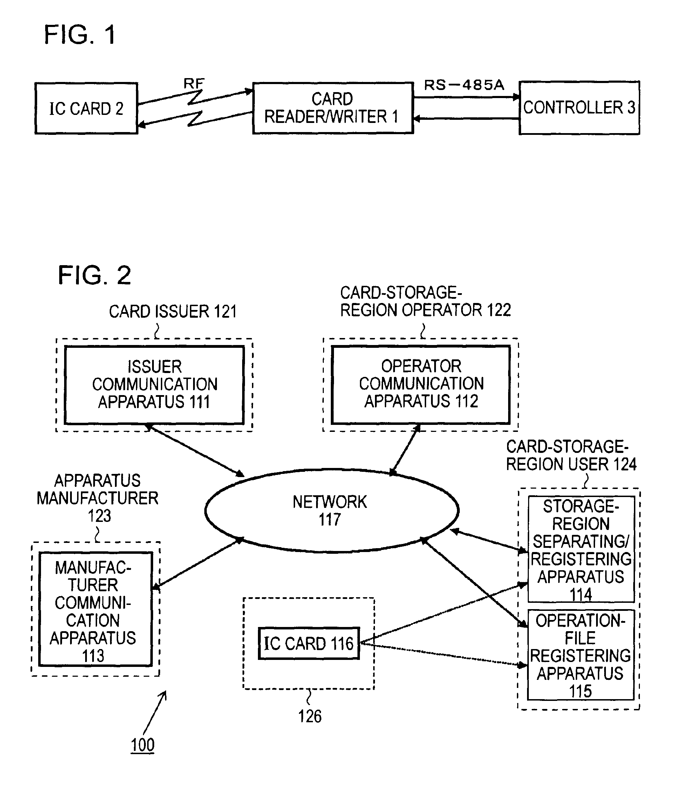

FIG. 1 schematically shows the configuration of a contactless IC-card communication system to which the present invention is applicable.

This contactless card system includes a card reader/writer 1, an IC card 2, and a controller 3. Data is transmitted and received between the card reader/writer 1 and the IC card 2 in a contactless manner utilizing electromagnetic waves. That is, the card reader/writer 1 transmits a predetermined command to the IC card 2 and the IC card 2 performs processing corresponding to the received command. The IC card 2 then transmits response data, corresponding to the processing result, to the card reader/writer 1.

The card reader/writer 1 is connected to the controller 3 via a predetermined interface (e.g., one compliant with the RS-485A standard or the like). By supplying a control signal to the card reader/writer 1, the controller 3 causes it to perform predetermined processing.

### B. Operation of IC Card

FIG. 2 schematically shows the entire configuration of a service providing system that uses electronic money, electronic tickets, and other value information which are realized using IC cards.

A system 100 shown includes, for example, an issuer communication apparatus 111 used by an IC card issuer 121, an operator communication apparatus 112 used by a card-storage-region operator 122, a manufacturer communication apparatus 113 used by an apparatus manufacturer 123, a storage-region separating apparatus 114 and an operation-file registering apparatus 115 used by a card-storage-region user 124.

When the IC card issuer 121 issues an IC card 116 to a card holder 126, file data regarding a service provided by the card-storage-region user 124 is registered in the IC card 16 based on a predetermined condition. Using the single IC card 116, the card holder 126 can receive services from both of the IC card issuer 121 and the card-storage-region user 124.

As shown in FIG. 2, in the system 100, the issuer communication apparatus 111, the operator communication apparatus 112, the manufacturer communication apparatus 113, the storage-region separating apparatus 114, and the operation-file registering apparatus 115 are connected through a network 117.

The IC card issuer 121 is one who issues the IC card 116 and provides his/her service through the IC card 116.

Upon receiving a request from the IC card issuer 121, the card-storage-region operator 122 provides a service for lending, of a storage region included in a storage section (a semiconductor memory) in the IC card 116 issued by the IC card issuer 121, a storage region that is not used by the IC card issuer 121 to the card-storage-region user 124.

Upon receiving a request from the card-storage-region operator 122, the apparatus manufacturer 123 manufactures the storage-region separating apparatus 114 and delivers it to the card-storage-region user 124.

By issuing a request to the card-storage-region operator 122, the card-storage-region user 124 uses the storage region of the IC card 116 to provide his/her own service. The card-storage-region user 124 corresponds to a service provider that creates a new file system by separating the memory region and provides his/her service by using his/her own file system.

The card holder 126 is one who receives the IC card 116 issued from the IC card issuer 121 and receives a service provided by the IC card issuer 121, that is, is an end user. After the issuance of the IC card 116, when the card holder 126 desires to receive a service provided by the card-storage-region user 124, he or she uses the storage-region separating apparatus 114 and the operation-file registering apparatus 115 to store a file data regarding the service of the card-storage-region user 124 onto the IC card 116. Thereafter, the card holder 126 can receive the service of the card-storage-region user 124.

When providing a service of the IC card issuer 121 and a service of the card-storage-region user 124 by using the single IC card 116. The system 100 has a configuration that makes it difficult for an unauthorized person to fraudulently write or overwrite data to the storage region in which the file data regarding the services of the IC card issuer 121 and the card-storage-region user 124 are stored.

Although FIG. 2 illustrates a case in which one IC card issuer 121, one card-storage-region user 124, and one card holder 126 exist, multiple issuers, users, and holders may exist.

The IC card 116 may be, as its definition, a card-type data communication device or may be embodied as a mobile phone (or another mobile terminal or CE device) having a built-in semiconductor chip incorporating the so-called "IC card function". The IC chip incorporating the contactless IC card function may be implemented with one chip into which an RF analog front end and a logic circuit (protocol control, RF modulation/demodulation, command processing, cryptographic processing, and memory management) are integrated or may be implemented with two or more chips in which the RF analog front end and the logic circuit are separated.

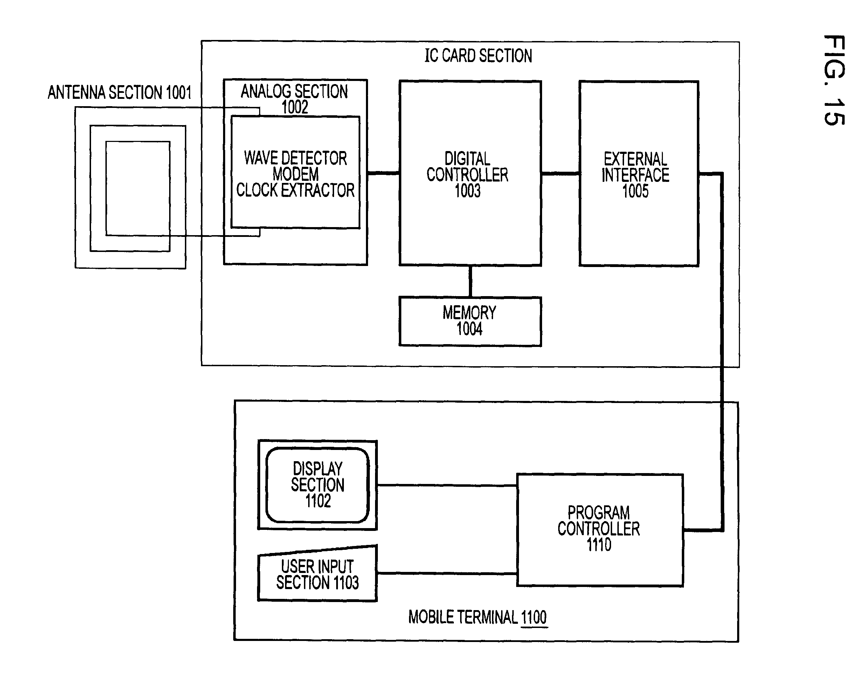

FIG. 15 schematically shows the hardware configuration of an IC card section according to one embodiment of the present invention. As shown, the IC card section is constituted by an analog section 1002 connected to an antenna section 1001, a digital controller 1003, a memory 1004, and an external interface 1005, and is built into a mobile terminal 1100. This IC card section may be implemented with a one-chip semiconductor-integrated circuit or may be implemented with two-chip semiconductor-integrated circuits by dividing the RF analog front end and the logic circuit section.

The antenna section 1001 performs contactless data transmission/reception to/from a card reader/writer apparatus, which is not shown. The analog section 1002 performs processing on analog signals sent/received to/from the antenna section 1001. Examples of the processing include wave detection, modulation/demodulation, and clock extraction. The antenna section 1001 and the analog section 1002 constitute a contactless interface between the IC card section and the card reader/writer apparatus.

The digital controller 1003 centrally controls the processing of transmission/reception data and the internal operation of the IC card. The digital controller 1003 is locally connected to the addressable memory 1004 and thus can use it to store an application for electronic money, electronic tickets, and so on, to load program code executed by the digital controller 1003, and to store work data during execution.

The external interface 1005 is a functional module via which the digital module controller 1003 performs connection with an apparatus, such as the mobile terminal 1100 or the like, based on an interface protocol that is different from the protocol for the contactless interface for linking with the card reader (not shown). Data written to the memory 1004 can be transferred to the mobile terminal 1100 via the external interface 1005.

In this case, when communication is performed with the card reader/apparatus, data received from the card reader/writer apparatus is transmitted to the mobile terminal 1100 via the external interface 1005, without being converted, after being converted according to an appropriate conversion rule, or after being converted into a different packet structure. Conversely, data received from the mobile terminal 1100 via the external interface is transmitted to the card reader/writer apparatus via the contactless interface, without being converted, after being converted according to an appropriate conversion rule, or after being converted into a different packet structure.

In the present embodiment, the IC card section is designed such that it is built into the mobile terminal 1100 for use, and a wired interface, such as a UART (Universal Asynchronous Receiver Transmitter), is used as the external interface 1005. However, the interface specification of the external interface 105 is not particularly limited and thus may be a wired interface or a wireless interface, such as a Bluetooth communication interface or IEEE 802.11 interface.

The IC card section can be driven by radio waves transmitted from the card reader/writer apparatus and received via the antenna section 1001. Naturally, the IC card section may be configured such that a portion or all thereof operate in response to power supplied from the mobile terminal 1100.

The mobile terminal 1100 corresponds to an information processing terminal, such as a mobile phone, PDA, personal computer (PC). The mobile terminal 1100 includes a program controller 1101, a display section 1102, and a user input section 1103.

The program controller 1101 is constituted by, for example, a microprocessor, a RAM, and a ROM (none of which are shown in FIG. 15). The microprocessor executes various processing services using the RAM as a work area, in accordance with program code stored in the ROM. The processing services include processing for the IC card section, in addition to the primary functions, such as a mobile phone function, of the mobile terminal 1100. Naturally, the program controller 1101 may be provided with an external storage device, such as a hard disk, and another peripheral device.

The program controller 1101 can access the IC card section via the external interface 1005.

The display section 1102 is implemented with, for example, a liquid-crystal display. The display section 1102 can display, on the screen, the result of processing performed by the program controller 1101, to notify the user about the result.

For example, the user input section 1103 is constituted by a key board and a jog dial or is constituted by a touch panel placed on the display screen of the display section 1102, and is used by the user to input a command and/or data to the mobile terminal rewritable information storage medium 1100.

The program controller 1101 in the mobile terminal 1100 is driven by power supplied a main power source, such as a battery, which is not shown.

When the user of the mobile terminal 1100 having the built-in IC card section holds the mobile terminal 110 to the card reader/writer apparatus, wireless communication between the IC card section and the card reader/writer apparatus is started and data is exchanged between the digital section 1003 and the card reader/writer apparatus via the antenna section 1001 and the analog section 1002 which serve as a wireless interface.

### C. File System

The use of the tamper resistance and the authentication function of the IC card can provide a service that requires security involving the communication of value information. In addition, in the present embodiment, file systems for respective service providers are allocated in a single memory region and the single IC card is shared by the multiple service providers and is used to provide multiple services.

With respect to the memory region in the IC card, in the initial state, the IC card issuer manages the entire memory region. When a service provider other than the IC card issuer separates a new file system from the memory region, both the separation right of the memory region and the authentication of the IC card issuer are required.

Once the memory region is separated, access to the file system requires authentication by the service provider of the file system instead of by the original IC-card issuer. Thus, the boundary between file systems serves as a firewall and can preferably block unauthorized access from another file system. This can ensure usability as if the IC card were issued by a service provider itself during the use of each service. Repeating the memory region separation operation provides a structure in which multiple files systems exist in the memory region in the IC card. The file-system separation means virtual IC-card issuance.

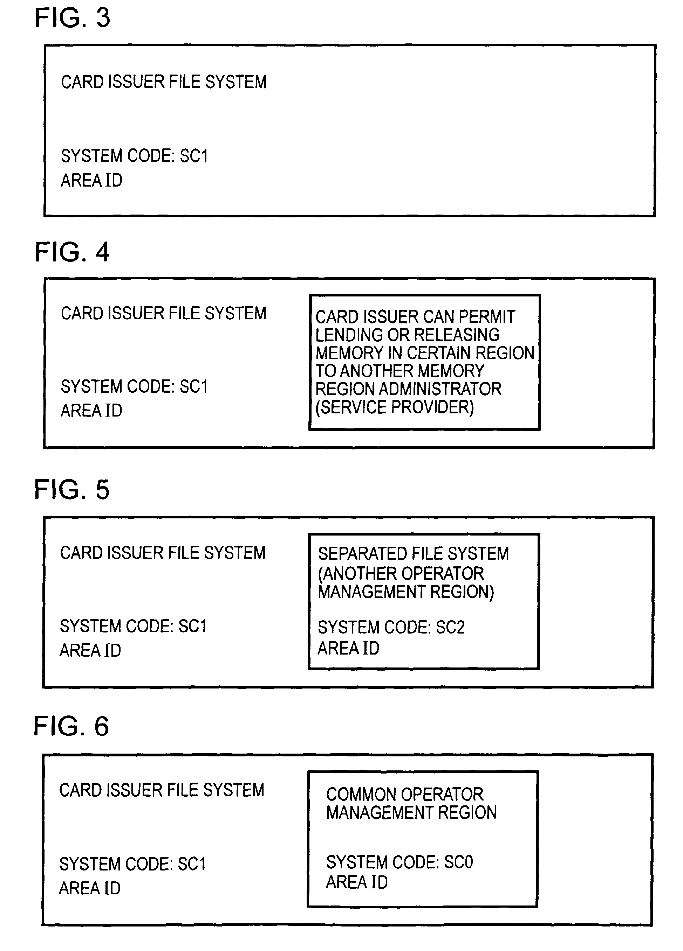

The operation of the memory region in the IC card will now be described with reference to FIGS. 3 to 6.

FIG. 3 shows the state of the memory region in which the original card issuer manages only his or her file system. System code SC1 for the original card issuer is issued by a system-code management organization. When an external device or program accesses the file system of the card issuer, SCI is used as an identification code (i.e., an argument for a request command).

FIG. 4 shows that the card issuer can permit lending (or releasing), of a blank region in his/her file system, a memory in a certain region to a region manager. At this stage, the file system in the memory region has not necessarily been separated yet. The card issuer can permit lending memory to multiple region managers, as long as his or her file system has a blank region. For example, in a configuration in a file system is identified with a 4-bit system code, the memory region can be separated into up to 16 areas (can be separated up to 15 times).

FIG. 5 shows a state in which another service provider has created a new file system by separating a memory region in a region permitted by the card issuer. This new file system is given system code SC2 by the system-code management organization. When an external device or program accesses the file system operated by the memory region administrator (the service provider), the system code SC2 is used as an identification code (i.e., an argument for the request command).

FIG. 6 shows a state in which a common region administrator separates a memory in a region permitted by the card issuer, by using common-region system code SC0. When an external device or program accesses the file system that is an operation region of the common region administrator, the system code SC0 is used as an identification code (an argument for a request command).

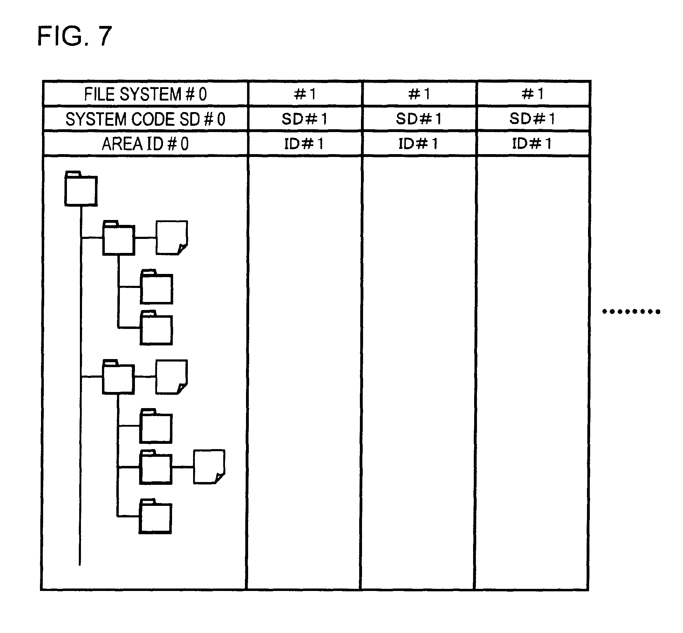

Repeating the separation operation on the memory region of the IC card provides a structure in which multiple files systems exist, as shown in FIG. 7. The original card issuer or the service provider who have obtained his/her own file system on an IC card through the permission by the original card issuer can utilize his/her own file system to provide areas and services for its own business expansion.

The operation in one file system will now be described. The same operation is essentially achieved in any file system.

A file system includes one or more file systems for achieving an application for communicating electronic value information with outside, such as a case for electronic payment. A memory region allocated to an application will be referred to as a "service memory region". A processing operation for utilizing an application, i.e., for accessing a corresponding service memory region, will be referred to as a "service". Examples of the service include read access to the memory, write access, and addition/subtraction of value to/from value information, such as electronic money.

In order to restrict the use of an application, i.e., the start of a service, in accordance with whether or not the user has an access right, a secret code, i.e., a PIN, is allocated to the application so that PIN verification processing is performed during the execution of the service. Also, for accessing a service memory region, encryption communication is appropriately performed depending on the security level of the application.

In the present embodiment, a hierarchal structure analogous to a "directory" is incorporated into each file system set in the memory region in the IC card. Each application allocated in the memory region can then be registered in an "area" in a desired hierarchal area.

For example, multiple applications that are used for a series of transactions or applications that are deeply associated with each other are registered in service memory regions in the same area (and, further, areas that are deeply associated with each other are registered in the same primary area). With this arrangement, the applications and areas in the memory region are arranged in an orderly manner and the applications are efficiently classified and organized for the user.

In order to hierarchically control an access right to a file system, a PIN can be set not only for each application but also can be set for each area. For example, the arrangement can also be such that, upon input of a PIN for a corresponding area, an access right to all applications (and sub-areas) in the area is given through verification processing and mutual authentication processing. Thus, inputting a PIN for a corresponding area only once can obtain an access right for all applications used in a series of transactions. Thus, access control becomes efficient and the usability of the apparatus is improved.

Additionally, the arrangement can be such that multiple access rights for one service memory region are permitted and secret codes are set for the respective access rights, i.e., for respective service contents executed in the service memory region. For example, different PINs are set for a service "read" and a service "read and write" executed for the same service region. Also, different PINs are set for "increasing the amount" and "reducing the amount" for electronic money or other value information. The arrangement can also be such that inputting of a PIN is not required for performing reading from a memory region but inputting of a PIN is required for performing writing.

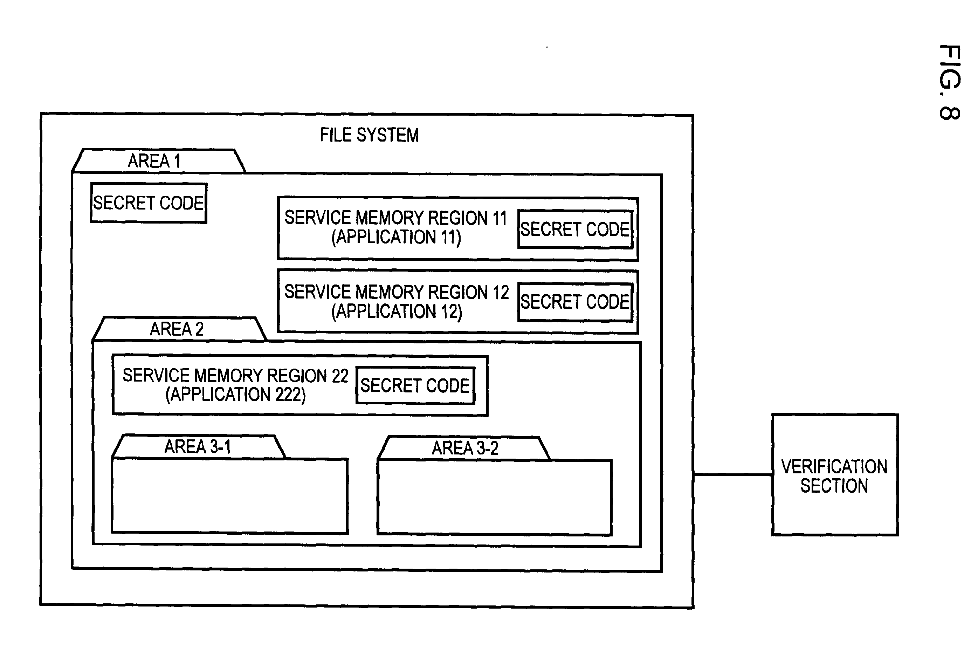

FIG. 8 schematically shows an example of the structure of data in a file system. In the illustrated example, a hierarchal structure similar to a "directory" is incorporated into a storage space of the file system. That is, each application allocated in the memory region can be registered in a service memory region in a desired hierarchal area. For example, applications that are deeply associated with each other, such as applications that are used for a series of transactions, can be registered in the same area (and, further, areas that are deeply associated with each other can be registered in the same primary area).

Applications (i.e., service memory regions) and areas allocated in the file system have secret code definition blocks. Thus, PINs can be set for the respective applications or areas. An access right for the file system can be given for each application as well as for each area.

In addition, PINs can be set for respective service contents when the number of access right to a service memory region is not one. For example, different PINs are set for a service "read" and a service "read and write" executed for the same service memory region, and different PINs are set for "increasing the amount" and "reducing the amount" for electronic money or other value information.

A verification section verifies PINs, transmitted via protocol interfaces for contactless data communication or the like using IC cards, against secret codes set in areas or service memory regions allocated to each application or directory. The verification section then permits an access to a corresponding memory region. Reading and writing can be performed to the memory region permitted to access, via the protocol interface.

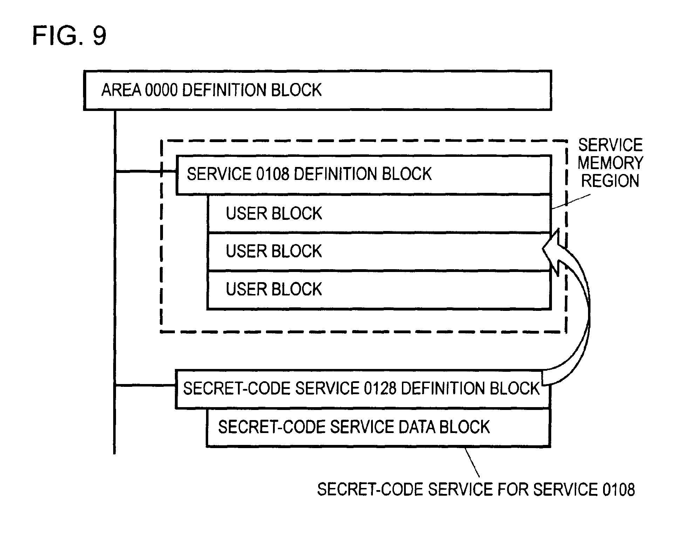

FIG. 9 shows a basic configuration of the file system. As already described with reference to FIG. 8, a hierarchal structure analogous to a "directory" is incorporated into the file system, so that a service memory region allocated to an application can be registered in a desired hierarchal area. In the example shown in FIG. 9, one service memory region is registered in an area 0000 defined by an area 0000 definition block.

The illustrated service memory region includes one or more user blocks. Each user block is a minimum data unit for which an access operation is ensured. One service defined by a service 0108 definition block, i.e., a service 0108, can be provided in the service memory region.

In addition to performing access restriction for each area and for each application, a secret code can be set for each type of service to perform access restriction for each service. Secret code setting information regarding a service to be subjected to the access restriction is defined as a secret-code-specific service (i.e., a "secret-code service"). In the example shown in FIG. 9, a secret code for the service 0108 is defined as a secret-code service 0128 definition block. The content of the secret-code service is stored in a secret-code service data block.

When the secret-code service for the service 0108 is enabled, secret-code verification using the secret-code service 0128 is required, before the service 0108 is started to perform a reading or writing operation on its user block. Specifically, when a read/write (read/write) command with encryption is used, a secret code, i.e., a PIN, for the service 0108 is verified before mutual authentication.

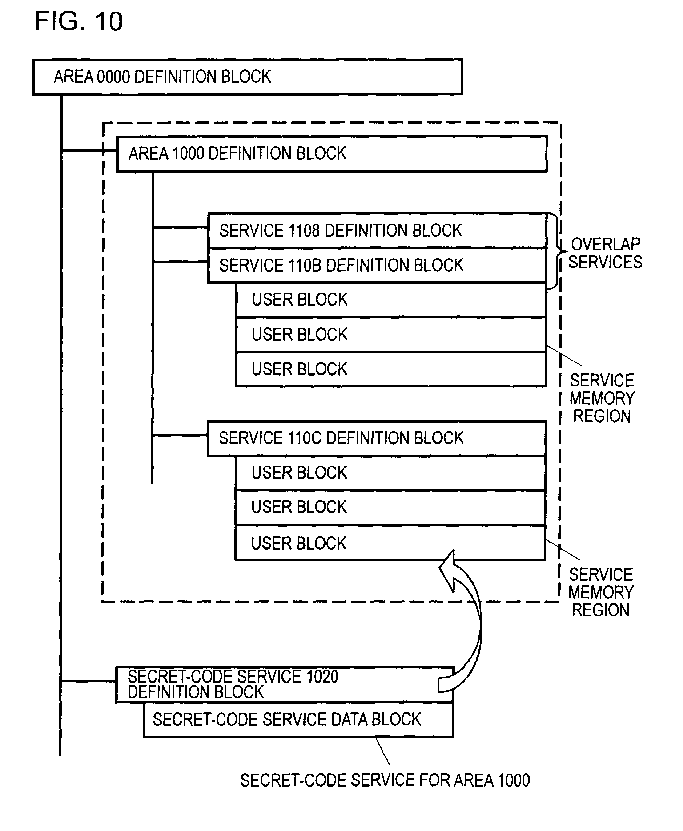

Also, a service memory region allocated to an application can be registered in a desired hierarchal area and areas can be hierarchized (i.e., areas that are deeply associated with each other can be registered in the same primary area). In this case, setting a PIN for each area can make the area to be an access restriction unit. FIG. 10 shows a state in which areas are hierarchized in the memory space in the IC card. In the illustrated example, in the area 0000 defined by the area 0000 definition block, another area 1000 defined by an area 1000 definition block is registered.

In the example shown in FIG. 10, two service memory regions are registered in the area 1000. A service 1108 defined by a service 1108 definition block and a service 110B defined by a service 110B definition block can be provided in one service memory region. In this manner, different multiple services defined in one service memory region will herein be referred to as "overlap services". With regard to the overlap services, different services are provided in the same service area in accordance with an input PIN. In the other service memory region, a service 110C defined by a service 110C definition block can be provided.

A service set in each service memory region is started to allow a reading or writing operation to be performed on its user block. As described with reference to FIG. 9, naturally, a secret-code service can be defined for each service. In this case, when a secret-code service for a service is enabled, the start of the service is permitted after PIN verification using the secret-code service is performed.

When it is desired to set a common PIN for multiple services, an area containing the services is created and a common secret-code service can be provided in the area.

In the example shown in FIG. 10, a secret code for the area 1000 is defined as a secret-code service 1020 definition block. The content of the secret-code service is stored in a secret-code service data block.

When a secret-code service for the area 1000 is enabled (described below), each service in the area 1000 is started after secret code verification using a secret-code service 1020 is performed, so that a reading or writing operation can be performed on its user block.

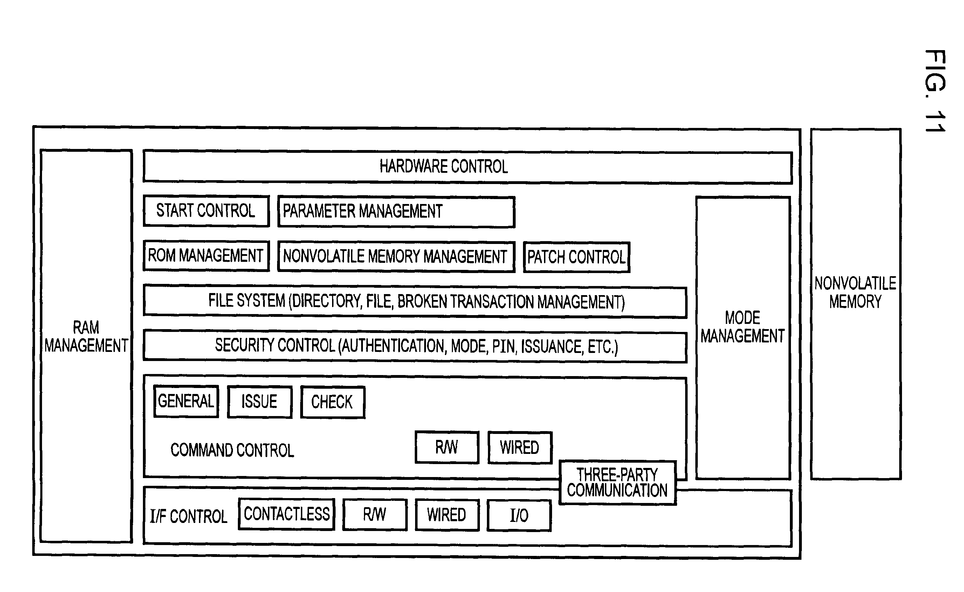

FIG. 11 schematically shows the functional configuration of firmware in the IC card in which multiple file systems can be provided in its internal memory.

An interface control section performs protocol control for communication with the card reader/writer via a contactless IC card interface, communication with the card reader/writer, communication via a wired interface, and communication with another I/O interface, and so on.

A command control section, for example, processes commands received from outside via the interface control section, issues commands to outside, and checks the commands.

A security control section achieves authentication processing for accessing a memory region or each file system in a memory region and security processing, such as PIN verification, for using a directory or a service in the file system.

A file-system control section performs, for example, file-system management, such as separating a memory region into file systems, as described above, (and cancellation of the separation), and performs management of the directory structure of each file system.

A mode management section manages all the file systems and modes of an individual file system. The modes referred to herein include states, such as the suspension and restart of using a file system.

In addition, the IC card includes firmware for start control, ROM management, parameter management, nonvolatile memory management, patch control, and hardware control in the IC card.

### D. File Archiving

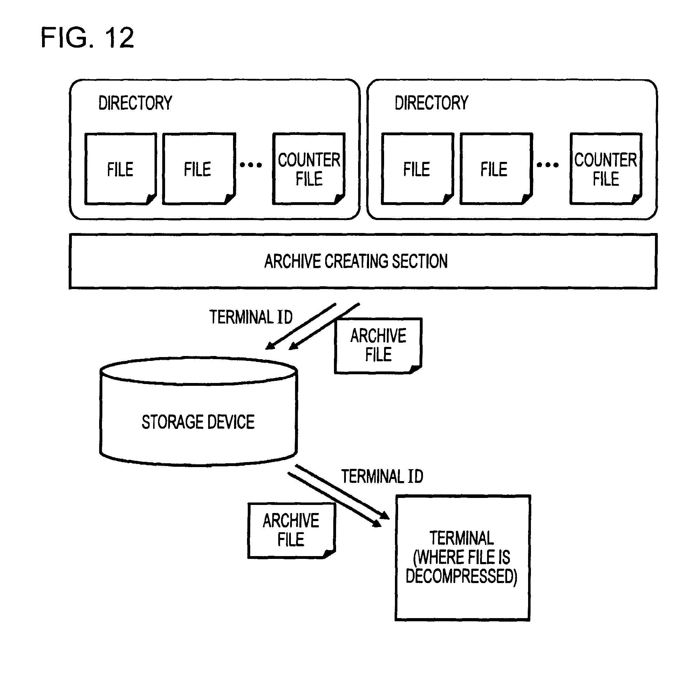

Data held by the IC card needs to be backed up. FIG. 12 illustrates a scheme for archiving files and directories in the IC card.

As described above, the memory space in the IC card has a hierarchal structure similar to a directory structure. An archive-file creating section creates an archive file for archiving a file or directory specified for backup. The format of the archive file is not particularly limited. A terminal ID for identifying a terminal where the archive file is to be decompressed is specified, so that the archive file is stored in a storage device. This achieves the backup of data in the IC card.

The storage device has tamper resistance to prevent unauthorized leak of the stored archive file. The storage device transfers the archive file to the terminal specified with the terminal ID.

The specified terminal decompresses the archive file to restore the original file and directory, so that the use thereof is resumed. With this arrangement, data in the IC card can be transferred to a correct destination.

On the other hand, a scheme in which access to the file and directory in the IC card is managed with a counter is employed. Further, after the archive file is achieved in a storage place, the counter value of the original file is erased so as to prevent access, thereby preventing transferred data from being duplicated.

In the present embodiment, a counter file that is a special file for managing the number of accesses to each file is provided in the memory or a directory. The counter file describes the maximum value of the number of accesses to each file in the memory or a directory.

Further, a file-link designator is employed, so that a link relationship between two or more files can be set. For two or more files that are designated with the file-link designator, a restriction, that is, any of the files cannot be opened unless they are opened at the same time, i.e., unless they are simultaneously subjected to authentication, is imposed. A file whose archive file was creates is linked with a counter file and the link is designated by a file-link designating file.

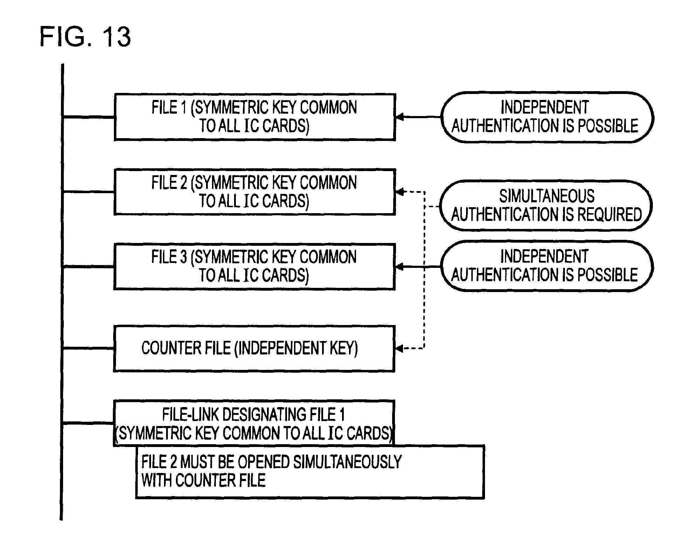

FIG. 13 schematically shows the basic configuration of a file system in which a link between files is designated. In the illustrated example, a file-link designator for designating simultaneous authentication of two or more files is configured to have a file format, similarly to other files in the file system. However, the file-link designator may be defined in another form.

In the illustrated example, files 1 to 3 and a counter file are arranged in the file system. Symmetric keys whose IC-card issuer is common to all IC cards are set with respect to the files 1 to 3. An independent key is set for the counter file.

In the illustrated example, a file-link designating file is arranged. This file is a special file for designating a combination of files that can be simultaneously authenticated. The file-link designating file is set so that the IC card issuer performs authentication with a symmetric key common to all IC cards, as in the case of the other files.

The file-link designating file defines a link between the file 2 and a counter file to be archived, i.e., defines that the file 2 must be opened simultaneously with the counter file.

It is assumed below that an authentication key required for opening a file is obtained by computing, using a function f, a key combination specified for the file.

The file 1 is not defined by any file-link designator. Thus, performing mutual authentication using only a symmetric key Kₛ₁ set for the file 1 allows the file to be opened. The authentication key in this case is as follows.

Authentication Key K_{AUTH1} = f (Authentication Key Kₛ₁ for File 1)

Mutual authentication of the file 2 cannot be performed using a symmetric key set for the file 2. The mutual authentication must be performed simultaneously with the counter file, in accordance with the setting of the file-link designating file. A mutual authentication key used in this case is an independent key, since a result of combination of a symmetric key Kₛ₂ for the file 2 and an independent key Kₚ for the counter file is used.

Authentication Key K_{AUTH2} = (Symmetric Key Kₛ₂ for File 2 and Independent Key Kₚ for Counter File)

When the file 2 is accessed with the authentication key K_{AUTH2}, the counter file is simultaneously opened and the counter value is decremented. When the counter value is 0xffff, the counter file can be opened any time. In contrast, when the counter value is 0, the counter file cannot be opened and thus the file 2 having the designated link cannot be opened either.

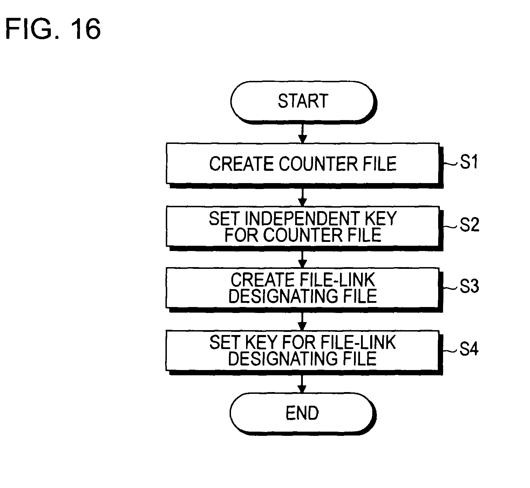

FIG. 16 shows, in a flow chart, a processing procedure for setting a link relationship between files in the file system. It is assumed in this case that a link relationship between a file to be archived and a counter file for restricting the number of accesses to that file is defined.

First, a counter file that describes the number of accesses to a file to be archived is created (step S1). Subsequently, an independent key for opening the counter file is set (step S2).

A file-link designating file that describes a link relationship between a file to be archived and the counter file is created (step S3). A key for accessing the file-link designating file is set (step S4). As this key, the symmetric key used for all IC cards is utilized (described above).

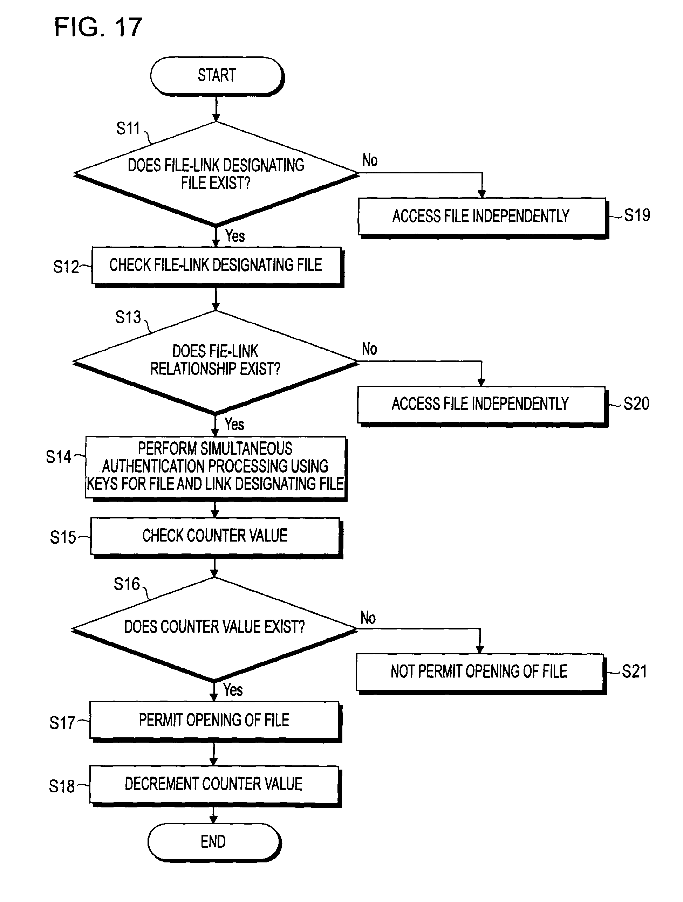

FIG. 17 shows, in a flow chart, a processing procedure for accessing a file having a file-link relationship designated in the file system. It is assumed in this case that a link relationship between a file to be archived and a counter file for restricting the number of accesses to the file is defined.

When the file system is accessed, first, the presence/absence of a file-link designating file in the file system is checked (step S11). When a file-link designating file does not exist, each file in the file system can be accessed by independent authentication processing, and thus the access is performed through authentication processing using a key set for each file (step S19). In the present embodiment, a symmetric key that is common to all IC cards is used as the key for the file-link designating file.

On the other hand, when a file-link designating file exists, a description in the file-link designating file is checked (step S12). A determination is made as to whether or not a file-link relationship is set for a file to be accessed (step S13).

When a file-link relationship is not set for a file to be accessed, the file can be accessed by independent authentication processing. That is, access can be performed through authentication processing using an independent key set for the file (step S20). In the present embodiment, a symmetric key common to all IC cards is used with respect to the same file.

When a file-link relationship is set for a file to be accessed (step S13), a key for the file to be accessed and a key for a file that has a link relationship with that file are used to generate an authentication key and simultaneous authentication processing is performed (step S14). In the present embodiment, the file that has the link relationship is a counter file in which the number of accesses to the file to be accessed is described and an independent key is set for the file that has the link relationship. Thus, even when the symmetric key common to all IC cards is used for the file to be accessed, simultaneous authentication cannot be performed without knowing the independent key for the counter file to thereby prevent the archive file from being freely manipulated.

When the simultaneous authentication succeeds, the counter file is then opened and the counter value is checked (step S15). When the counter value still remains (step S16), a file to be accessed can be accessed. Thus, the opening of the file is permitted (step S17) and the counter value is decremented by 1 (step S18). In contrast, when the counter value is already erased, the opening of the file is not permitted (step S21).

As described above, a scheme in which a file-link relationship is designated is employed. As a result, even for a file to which a symmetric key common to all IC cards is allocated, setting a link relationship with a file to which an independent key is given in the file system causes simultaneous authentication to be required. Thus, fraudulent access to the same file in another IC card by using a common key known by obtaining another IC card can be restricted.

When a file is stored in the file system, designating s file link with a counter file allows the number of accesses to the file in the file system to be freely set. For example, with respect to a file to be archived, a file link with a counter file whose counter value is set to "1" is designated before that file is archived. In this case, since the counter value is erased at the point when the file is archived, the file cannot be accessed after the archiving, unless the counter value is overwritten through the authentication with the counter file. This achieves secure file transfer.

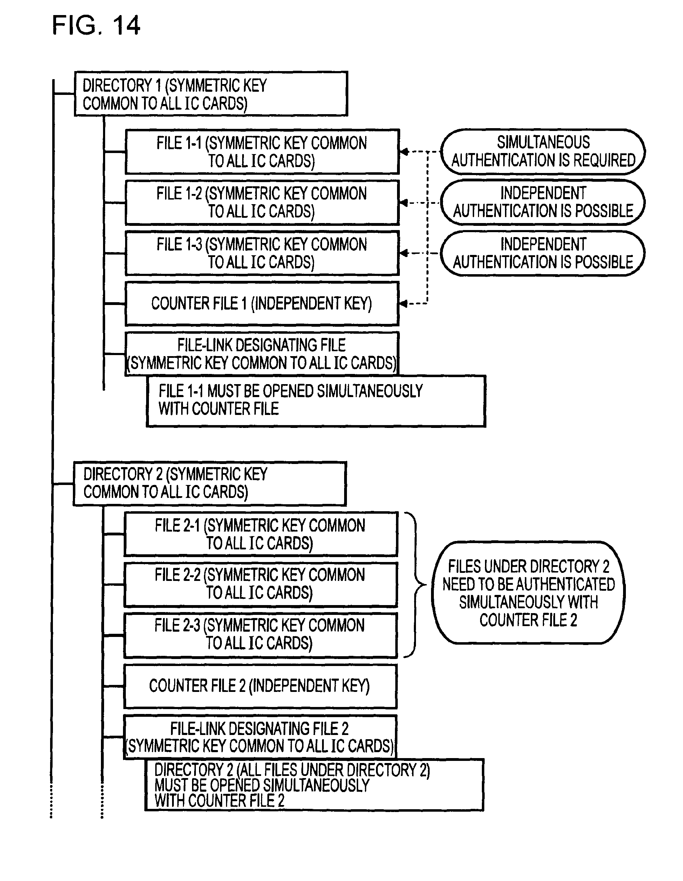

As described above, a directory structure can be incorporated into a file system decompressed in the memory region in the IC card. In this case, the file-link designation scheme can also be applied to a directory. FIG. 14 schematically shows the configuration of a file system in which a file in a directory and a counter file are linked or a directory and a counter file are linked.

File 1-1, file 1-2, file 1-3, counter file 1, and file-link designating file 1 are arranged under directory 1.

Symmetric keys whose IC-card issuer is common to all IC cards are set with respect to the file 1-1, file 1-2, and file 1-3, respectively. An independent key is set for the counter file 1. The file-link designating file 1 is set so that authentication is performed using a symmetric key whose IC-card issuer is common to all IC cards.

The file-link designating file 1 is a special file for designating a combination of files that can be simultaneously authenticated. In this case, it is defined that the file 1-1 and the counter file 1 are linked, i.e., the file 1-1 and the counter file 1 must be simultaneously opened.

Thus, the file 1-2 and the file 1-3 can be independently authenticated using only respective symmetric keys, whereas the file 1-1 cannot be independently authenticated and must be mutually authenticated simultaneously with the counter file 1. A mutual authentication key used in this case is an independent key, since a result of combination of a symmetric key Kₛ₁₋₁ for the file 1-1 and an independent key Kₚ₁ for the independent key file is used.

Authentication Key K_{AUTH} = f (Symmetric Key Kₛ₁₋₁ for File 1-1 and Independent Key Kₚ₁ for Counter File 1)

When the file 1-1 is opened, the counter file 1 is simultaneously opened and the counter value is decremented. When the counter value is 0xffff, the counter file can be opened any time. In contrast, when the counter value is 0, the counter file cannot be opened and thus the file 1-1 having the designated link cannot be opened either.

On the other hand, file 2-1, file 2-2, file 2-3, counter file 2, and file-link designating file 2 are arranged under directory 2.

Symmetric keys whose IC-card issuer is common to all IC cards are set with respect to the file 2-1, file 2-2, and file 2-3. An independent key is set for the counter file 2. The file-link designating file 2 is set so that the authentication thereof is performed using a symmetric key whose IC-card issuer is common to all IC cards, as in the case of the general files.

The file-link designating file 2 is a special file for designating a combination of files that can be simultaneously authenticated. In this case, it is defined that the directory 2 and the counter file 2 are linked, i.e., the directory 2 must be opened simultaneously with the counter file 2.

Thus, all the general files under the directory 2 cannot be independently authenticated and the directory 2 must be mutually authenticated simultaneously with the counter file 2.

When the directory 2 is opened, the counter file 2 is simultaneously opened and the counter value is decremented. When the counter value is 0xffff, the counter file can be opened any time. In contrast, when the counter value is 0, the counter file cannot be opened and thus the directory 2 having the designated link cannot be opened either.

When a counter file is to be linked with a directory, in the processing procedure for setting the file-link relationship, a file-link designating file that describes a link relationship between the directory and a counter file is replaced, in step S3 in the flow chart shown in FIG. 16. Also, in the processing procedure for accessing a directory having a designated file-link relationship, the presence/absence of the file-link designating file is checked in the directory to be accessed, in step S11 in the flow chart shown in FIG. 17, and the entire directory is subsequently authenticated and accessed instead of a specific file.

In this manner, the function for archiving one or more directories or one or more files can be achieved. There are following two options for archiving. This can achieve the backup or copy of a file.

(1) Archived data can be decompressed only with a terminal (a file system) having an ID specified when it was archived.
(2) Archived data can be decompressed in any file system.

For example, a counter file is linked with a directory. When the directory is opened, the counter of the counter file is decremented. When the counter value is 1 before the directory is archived, the counter indicates 0 after the archiving. Thus, the directory cannot be accessed without accessing the counter file thorough an authentication procedure and overwriting the counter value. This achieves the movement of the directory and the file.

When the directory is a root directory, the entire file system can be backed up, copied, or moved.

### Industrial Applicability

The present invention has been described above in detail with reference to the particular embodiment. However, it is obvious that those skilled in the art can make a modification and substitution to the embodiment in a scope without departing from the substance of the present invention.

Although the embodiment in which a file is securely archived and backed up has been described herein in conjunction with an example of the file space provided in a memory built in an IC card or IC chip, the substance of the present invention is not limited thereto. For example, the present invention can be applied to a case in which access management for archiving of an analogous file system or for an archived file system on a memory device other than an IC card or IC chip and can provide the same advantages.

In essence, the present invention has been disclosed by way of example and the content described herein should not be construed as limiting. The scope of the claims should be taken into account in order to understand the substance of the present invention.

## Claims

1. An information management apparatus, comprising:
a communication section for transmitting/receiving data through a wireless or wired transmission path;
data processing section for processing the data transmitted/received by the communication section;
a memory space in which a file processed by the data processing section is arranged; and
archive-file creating means for creating an archive file for at least one file to be backed up, identification information of a destination at which the archive file is to be decompressed being attached to the archive file.

2. The information management apparatus according to claim 1, further comprising access management means for managing access to the file whose archive file was created.

3. The information management apparatus according to claim 2, further comprising file-link designating means for designating a link of files to be simultaneously opened,
wherein the file associating designating means designates a link between a file whose archive file was created and an access management information file in which access management information for the file is described, and
when the file whose archive file was created is accessed, the access management means simultaneously opens the access management file, performs access management in accordance with the access management information, and updates content of the access management information.

4. The information management apparatus according to claim 3, wherein the access management information file describes a counter value, as the access management information, for the file whose archive file was created; and
the access management means decrements the counter value every time when the access management information file is opened.

5. The information management apparatus according to claim 1, wherein the memory space employs a directory structure, and
the archive-file creating means creates an archive file for a directory to be backed up, identification information of a destination at which the archive file is to be decompressed being attached to the archive file.

6. An information management method, comprising:
a communication step of transmitting/receiving data through a wireless or wired transmission path;
a data-processing step of processing the data transmitted/received in the communication step;
a step of arranging a file, processed in the data processing step, in the memory space; and
archive-file creating step of creating an archive file for at least one file to be backed up, identification information of a destination at which the archive file is to be decompressed being attached to the archive file.

7. The information management method according to claim 6, further comprising an access management step of managing access to the file whose archive file was created.

8. The information management method according to claim 7, further comprising a file-link designating step of designating a link of files to be simultaneously opened,
wherein in the file-link designating step, a link between a file whose archive file was created and an access management information file in which access management information for the file is described is designated, and
in the access management means, when the file whose archive file was created is accessed, the access management file is simultaneously opened, access management is performed in accordance with the access management information, and content of the access management information is updated.

9. The information management method according to claim 8, wherein the access management information file describes a counter value, as the access management information, for the file whose archive file was created; and
the counter value is decremented every time when the access management information file is opened in the access management step.

10. The information management method according to claim 6, wherein the memory space employs a directory structure, and
in the archive-file creating step, an archive file for a directory to be backed up is created, identification information of a destination at which the archive file is to be decompressed being attached to the archive file.
